Europäisches Patentamt

(19) European Patent Office

Office européen des brevets

(11) Publication number: **0 130 062**
**A1**

(12) **EUROPEAN PATENT APPLICATION**

(21) Application number: **84304231.8**

(22) Date of filing: **22.06.84**

(51) Int. Cl.⁴: **F 16 K 11/06**

(30) Priority: **23.06.83 US 507251**

(43) Date of publication of application:
**02.01.85 Bulletin 85/1**

(84) Designated Contracting States:
**DE FR GB**

(71) Applicant: **INTERNATIONAL HARVESTER COMPANY**
**401 North Michigan Avenue**
**Chicago Illinois 60611(US)**

(72) Inventor: **Dufour, Donald J.**
**7920 Woodglen Lane**
**Downers Grove Illinois 60516(US)**

(72) Inventor: **Holloway, Gale A.**
**1520 Pine Grove Lane**
**Joliet Illinois 60432(US)**

(74) Representative: **Geldard, David Guthrie et al,**
**URQUHART-DYKES AND LORD 11th Floor, Tower House**
**Merrion Way**
**Leeds, LS2 8PB West Yorkshire(GB)**

(54) Pilot operated hydraulic unlatch of a valve.

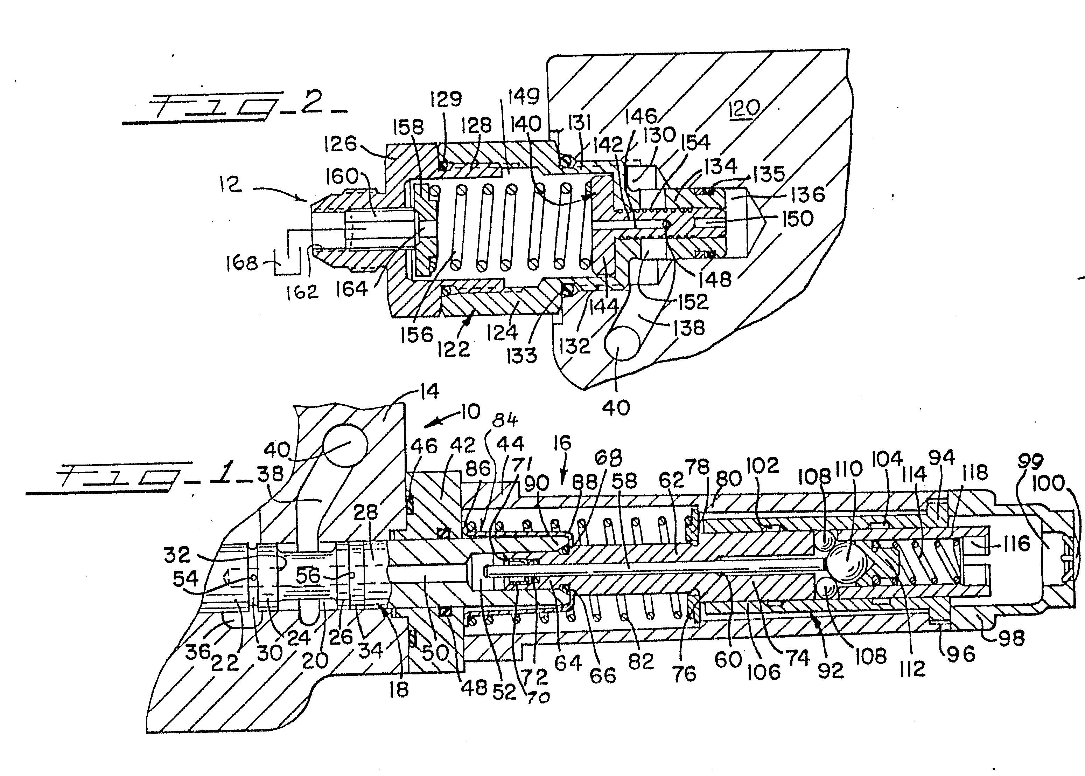

(57) A pilot operated hydraulic unlatch assembly automatically places the valve spool (18) into a neutral position (Figure 1) from any of a plurality of detented positions at a preselected pump pressure level. In each detent position detent balls (108) engage a respective detent groove (102, 104) and may be released therefrom by a fluid-operated plunger (58) operating against a biasing spring (114). When released, a spring system (82) centres the valve spool (18) to its neutral position. This terminates an unnecessary pressure build-up.

EP 0 130 062 A1

- 1 -

## PILOT OPERATED HYDRAULIC UNLATCH OF A VALVE

This invention pertains to hydraulic unlatching of valves and more particularly to pilot operated hydraulic unlatching from preselected detented positions into a neutral position. It is particularly useful in a tractor hydraulic system for controlling positions of an agricultural implement.

Heretofore, various pilot operated hydraulic systems have been disclosed and which can be exemplified in the following patents.

For instance, the U.S. Patent 3,628,424 discloses a hydraulic power circuit employing remotely controlled directional control valves; the U.S. 3,805,678 discloses a hydraulic control system for load supporting hydraulic motors having a pilot controlled load check valve; U.S. Patent 3,557,829 illustrates a pilot valve for actuating a main control of the hydraulic circuit. The U.S. Patent Re.26,028 discloses a pilot operated control valve mechanism for a control of a fluid motor regardless of the capacity of the valve mechanism.

However, none of the cited references employs a pilot operated hydraulic unlatch of a valve detent mechanism as described hereinbelow.

According to a first aspect of the invention a pilot operated hydraulic system for hydraulic unlatching of a control valve from a preselected detented position into a neutral position comprises reciprocably movable metering means disposed within said pilot and located on a communication line between a pump pressure supply source and said control valve; said metering means regulating an inlet of a pump pressure fluid flow into said valve for activating a detent mechanism interconnected therewith at a predetermined pressure; actuating means for releasing a spring loaded detent in said detent mechanism from said preselected detented position upon a hydraulic impulse from said pilot; and biasing means urging said valve to be retained in said neutral position after · release thereof from said detented position.

From a second aspect a tractor hydraulic system according to the invention, for controlling positions of an agricultural implement, includes a hydraulic pilot unlatching assembly comprising: a detached cartridge with a built-in pressure sensitive metering device; a hydraulic valve with a spool affecting the fluid flow to said implement; said valve including a detent mechanism capable of retaining said spool in one of a plurality of selected implement command positions; each related to placement of the implement into a particular operational mode; said metering device permitting the fluid inlet into said valve at a predetermined pump pressure to bring said spool into a neutral position while retaining said implement in one of said command positions without further unnecessary pressure build-up.

A specific embodiment of a system according to the invention will now be described in more detail, by way of example only, with reference to the accompanying drawings, in which:-

Figure 1 is a cross-sectional fragmentary view of a control valve in its neutral position;

Figure 2 is a cross-sectional view of a pilot mechanism cartridge;

Figure 3 is a cross sectional view of the control valve showing the locked detent and valve spool in the "L" position; and

Figure 4 is a cross-sectional view of the control valve with the spool in the "R" position.

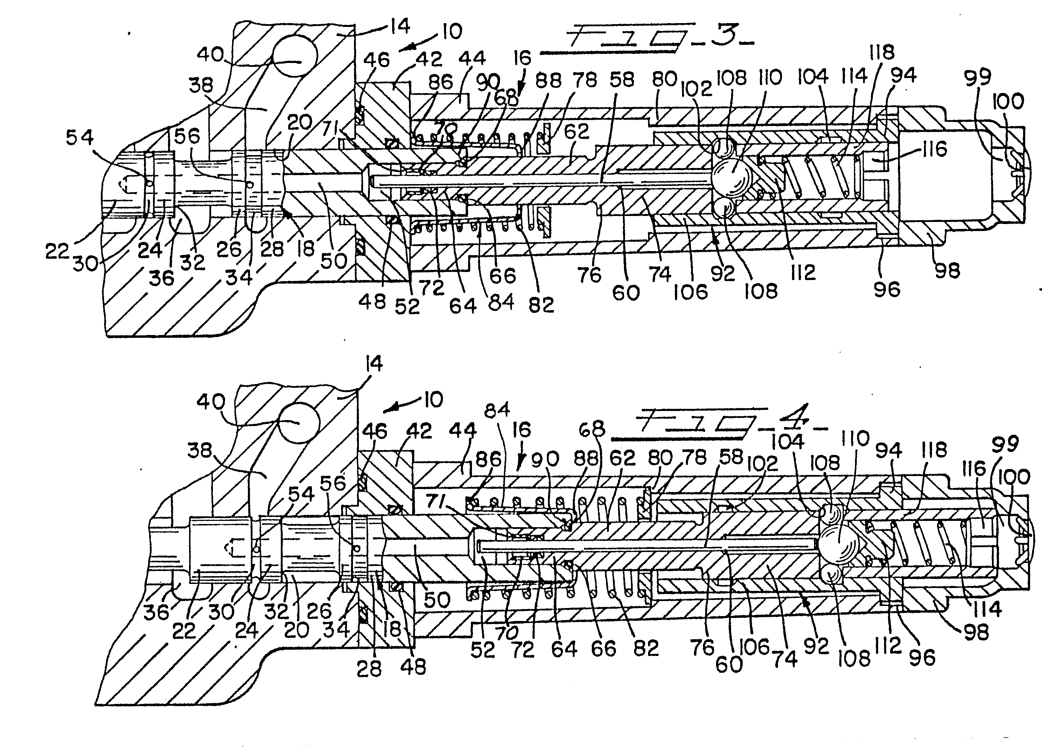

Referring now to the drawings wherein reference characters designate like or corresponding parts throughout the several views, there is shown in Fig. 1 a control valve 10 in its neutral "N" position. The valve 10 controls various functions of an agricultural vehicle, such as a tractor discussed hereinbelow or the like, and particularly regulates operational positions of an implement coupled with a tractor hydraulic system. The valve 10 is controlled by a pilot unlatching assembly generally designated at 12, as shown in Fig. 2.

An auxiliary or control valve having a body 14, as illustrated in Figs. 1, 3 and 4, can be controlled by a detent mechanism generally designated at 16. The valve 10 comprises a spool 18 reciprocably moveable within the bore 20. The spool 18 can be manually shifted by an operator and automatically move from its detented position by the pilot unlatching assembly 12. The command or detent positions raise "R", lower "L", and neutral "N" reflect commands given to implement hydraulic cylinders to respectively raise or lower an implement attached to a tractor, and in the neutral position to retain the implement in one of the above mentioned positions. The hydraulic unlatching from R or L positions into a neutral position in effect terminates a pump pressure build-up in the implement hydraulic cylinders, thereby retaining the constant pump pressure therein when the implement reaches predetermined angular positions. The position or mode of operation of the implement is determined by a position of the spool 18 in the valve 10 redirecting the hydraulic fluid flow through the tractor hydraulic system into the corresponding implement hydraulic system (not shown).

The spool 18 comprises lands 22, 24, 26, and 28, which are separated by grooves 30, 32 and 34. The work port passage 36 is utilized for other control valve functions, which are not pertinent to the pilot unlatching mechanism operation. A pilot unlatching passage 38 disposed in the valve body 14 communicates with the bore 20 and a port 40 which in turn communicates with the pilot unlatching assembly 12. A mount plate 42 is rigidly attached to and disposed between the valve body 14 and detent mechanism housing 44. An O-ring seal 46 is located between the mount plate 42 and valve body 14. An O-ring seal with a teflon back-up washer 48 trapped in the mount plate 42 encircles the spool 18 moveable therethrough. An actuating fluid bore 50 drilled along the longitudinal axis of the spool 18 crosses the grooves 30, 32 and 34 and transforms into a spool end cavity 52 which is larger in size than the coaxial bore 50. The fluid from the passage 38 can enter the bore 50 through the cross-drilled conduits 54 and 56 in the grooves 30 and 34, respectively. After entering the bore 50 the fluid moving into the cavity 52 creates a pressure which forces a detent pin 58 to move inside a bore 60 of an actuator 62 in the detent mechanism housing 44 in and coaxial with the spool 18. The first end 64 of the actuator 62 includes a cannelure adapted to receive an O-ring seal 68 and a retainer cup 70 in the actuator cavity 71 facing the spool bore 50. The retainer cup 70 is backed by an O-ring seal with a teflon washer 72 in the cavity 71. The detent pin 58 reciprocably moves through the cup 70 and the seal 72. Second end 74 of the actuator 62 has a shoulder 76 reactively engageable with a spring retaining washer 78. The detent mechanism housing 44 has an inwardly extending shoulder 80 serving as a seat for the spring retaining washer 78 and limiting its longitudinal displacement within the housing 44. A centering spring 82 is trapped between the spring retaining washer 78 on one end and a cup-shaped spring retainer 84 on the other. The retainer lip 86 extends outwardly of the cup retainer 84, so as to prevent the longitudinal extension of the spring 82. The cup bottom flange 88 abuts the spool tip 90 and exerts the force thereon in all command positions.

A detent sleeve 92 emcompasses the actuator 74 moveable therein. The sleeve 92 position is fixed by its lock flange 94 extending outwardly thereof and trapped in a rabbet 96 in the housing 44, which is contiguous with the end cap 98 bolted to the housing 44 (not shown). The end cap 98 has an opening 99 which is covered by a button plug 100.

The detent sleeve 92 has a number of spaced apart grooves corresponding to the spool command positions. A groove 102 represents the lower (L) position of the implement, meaning that in this position the hydraulic cylinder on the implement will begin to lower the implement toward the ground. A groove 104 represents the raised (R) position reflecting a command to the implement hydraulic system to begin to raise the implement into the upward position. The grooves 102 and 104 in the detent sleeve wall 106 adapted to receive small detent balls 108, which are forced into them by a large detent ball 110 for a detented lock engagement. The detent balls 108 and 110 of the detent mechanism 16 are constantly urged to abut the actuator end 74 by a ball rider 112 disposed coaxially with the actuator 62. The ball rider 112 in its turn is urged by a detent spring 114 trapped by a detent adjusting screw 116 in a detent spring housing 118.

Referring now to the Fig. 2, wherein a valve body 120 or any other pilot unlatching cartridge 122 holding structure is shown. The cartridge 122 consists of cartridge housing 124 detachably connected with an end fitting 126 by a threaded screw joint 128 and an O-ring seal interspersed therebetween. The cartridge housing 124 includes a neck 131 which fits into a valve cavity 130 by virtue of a screw thread attachment 131. An O-ring seal 133 encircling the neck 131 is placed at the valve cavity and neck intersection. A cylinder head 134 extending outwardly from the neck 131 with an O-ring 133 encircling the outer surface thereof projects into a cartridge bore 136. A pilot unlatching passage 138 intersects the bore 136 and also communicates with the port 40.

A poppet 140 comprises a stem 142 and platform 144, forming a "T"-shaped cross-section, and reciprocably moves within the cartridge 122. A bleed channel 146 penetrates the platform 144 and stem 142 until the intersection with the bleed hole 148. A bleed system comprising the bleed channel 146 and bleed hole 148 is designed for draining the fluid leakage around the poppet 140 into the housing cavity 149. The poppet stem 142 has a metering notch 150 at the end thereof communicating with the cartridge bore 136. The pump pressure fluid supplied by a vehicle hydraulic system pump is directed into the cartridge bore 136. The pump pressure fluid constantly present in the bore 136 can squeeze through the space between the stem 142 and the cylinder head 134. The stem 142 has balancing grooves 154 on the outer surface thereof for centering the stem and assisting in blocking the fluid leakage by the fluid trapped therein. But the fluid from the bore 136 still can seep through and falsely trigger the valve detent mechanism 16 by flowing through the cross bore 152. The platform 144 reactively abuts a compression spring 156 located in the cartridge housing cavity 149 and restricted on the other end by a retaining washer 158. A tension adjusting screw 160 threadably attached to the end fitting opening 162 permits the fluid from the cartridge housing cavity 149 to drain through an aperture 164 in the spring washer 158 into a tank port of the dump reservoir 168 diagrammatically shown in Fig. 2.

In operation, the vehicle hydraulic system pump supplies the fluid into the cartridge bore 136. The pump pressure fluid forces the poppet 140 to move inside the cartridge cavity 149 at a predetermined pressure adjustable by the screw 160. The pump pressure acting on the stem 142 pushes it against the spring 156 force until the metering notch 150 exposes the pressurized fluid to the cross bore 152. This crack open position permits the fluid to fill the passage 138 and through the communication port 40 and the cross-drilled openings 54 or 56 to impulsively act upon the detent pin 58 which in turn strikes the detent ball 110. The fluid force at a predetermined pressure thus collapses the ball detent engagement with one of the command position grooves 102 or 104. The detent pin 58 pushes the ball 110 against the force of the spring loaded rider 112 thereby permitting small balls 108 fall into the detent sleeve 106. Thereafter the centering spring 82 forces the spool 18 as well as the actuator 74 and detent spring housing 118 with its contents to move into the neutral position. In the neutral position the balls 108, 110 are disposed between the command grooves 102 and 104, as best shown in Fig. 1.

If an operator placed the spool 18 into the "L" position, the detent balls 108 are seated in the groove 102, as shown in Fig. 3. The hydraulic fluid flow controlled by the spool 18 moves into the implement hydraulic cylinder (not shown) lowering the implement until the pressure reaches a certain level. At this level the pump fluid pressure impulse overcomes the spring force applied to the poppet 140 and runs into the port 40 and the cross-drilled conduit 56 being positioned in the passage 38. The fluid impulse exerted upon the detent pin 58 via the bore 50 collapses the detent locking engagement. The balls 108, 110 together with the detent spring housing 118 move the neutral position under the force of the centering spring 82 which is applied to the retaining washer 78 and coacting actuator shoulder 76. Further linear extension of the spring 82 is limited by the reactive contact of the cup shaped retainer 84 with the mount bracket 42.

Analogously, when the spool is in the raised "R" position the detent balls 108 are seated in the groove 104 and the fluid impulse reaches the detent pin 58 through the cross-drilled opening 54 positioned in the passage 38 and spool bore 50 violates the ball detent engagement with the groove 104 and under the force of the centering spring 82 the actuator 62 and spring housing 118 retract into the neutral position. Since linear extension of the spring 82 will be limited by the shoulder 80 of the detent housing 14 the cup shaped retainer 86 will move the spool 18 into the "N" position which corresponds to the lip 86 contact with the mount bracket 42.

The pilot operated hydraulic unlatcn provides the means of hydraulically unlatching a control valve from detented raise or lower positions with the minimal difference between the raise and lower unlatch pressures. An additional function of the hydraulic unlatch is to isolate the adjustment of the hydraulic unlatch pressure from the adjustment of the force maintaining the spool in a detent position, which is a factor in the manual effort required to shift the directional spool. The existing hydraulic unlatching mechanisms have disadvantages of having a large spread between the raise and lower unlatch pressure and having the common adjustment for both manual efforts and unlatching pressure. The above described design overcomes both of these deficiencies. Tne pilot operated hydraulic unlatch bringing the spool into a neutral position from detented positions terminates the pressure built-up necessary for the implement positioning without use of a mechanical system having similar functions.

While one embodiment of the invention has been illustrated and described herein, various changes and modifications may be made therein.

CLAIMS:

1. A pilot operated hydraulic system for hydraulic unlatching of a control valve from a preselected detented position into a neutral position and comprising: reciprocably movable metering means disposed within said pilot and located on a communication line between a pump pressure supply source and said control valve; said metering means regulating an inlet of a pump pressure fluid flow into said valve for activating a detent mechanism interconnected therewith at a predetermined pressure; actuating means for releasing a spring loaded detent in said detent mechanism from said preselected detented position upon a hydraulic impulse from said pilot; and biasing means urging said valve to be retained in said neutral position after release thereof from said detented position.

2. A system according to claim 1, in which said metering means comprises a poppet spring loaded to a closed portion by a compression spring and having a metering part at an end thereof.

3. A system according to claim 2, in which said poppet is disposed in a detachable cartridge including a spring tension adjusting means; and including a bleed system for draining fluid through said cartridge to prevent inadvertent actuation of said detent mechanism.

4. A system according to any one of the preceding claims in which said valve comprises a spool with a cross-drilled opening capable of being exposed to said hydraulic impulse and correspondingly affecting said detented position; said opening facilitating communication between said metering means and said detent mechanism.

5. A system according to any one of the preceding claims in which said actuating means comprises a detent pin reactively engageable with detent balls of said detent mechanism by said pump pressure fluid flow.

6. A system according to any one of the preceding claims in which the control valve is capable of adopting either one of two preselected detent positions and of being held therein by said detent mechanism.

7. A tractor hydraulic system for controlling positions of an agricultural implement, the system including a hydraulic pilot unlatching assembly comprising: a detachable cartridge with a built-in pressure sensitive metering device; a hydraulic valve with a spool affecting the fluid flow to said implement; said valve including a detent mechanism capable of retaining said spool in one of a plurality of selected implement command positions; each related to placement of the implement into a particular operational mode; said metering device permitting the fluid inlet into said valve at a predetermined pump pressure to bring said spool into a neutral position while retaining said implement in one of said command positions without further unnecessary pressure build-up.

8. A system according to claim 7 in which said cartridge includes a spring loaded poppet with a metering recess; said spool has openings correlated with said command positions; and said metering recess permits interconnection of a pump pressure fluid line with said detent mechanism via said openings at a predetermined pressure.

9. A system according to claim 7 or claim 8 in which said detent mechanism comprises a tri-ball detent biased to a locking position by a spring means and reciprocably movable within a detent mechanism housing; said detent being lockingly seatable in any selected one of a plurality of command position grooves disposed within said detent mechanism housing.

10. A system according to any one of claims 7 to 9 and including a centering spring located within said valve for biasing said spool from one of said command positions into said neutral position.

11. A system according to any one of claims 7 to 10 in which said cartridge has a fluid bleed system permitting the pump pressure fluid to be drained therethrough in order to avoid an accidental triggering of said detent mechanism; and a spring tension adjusting member is disposed within

said cartridge.

FIG_2_

FIG_1_

1/2

0130062

FIG-3-

FIG-4-

0130062

0130062

European Patent
Office

EUROPEAN SEARCH REPORT

Application number

EP  84 30 4231

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-3 041 987  (ROBERT BOSCH GmbH) <br> * claim 1; page 6, lines 3-14; page 8, line 15 - page 9, line 17 * | 1,2,4, 5,6 | F 16 K  11/06 |
| | --- | | |
| X | US-A-3 093 158  (HYDRAULIC UNIT SPECIALTIES CO.) <br> * column 1, line 36 - column 2, line 2 * | 1 | |
| | --- | | |
| A | DE-A-2 632 800  (ROBERT BOSCH GmbH) <br> * claim 1 * | 1 | |
| | --- | | |
| A | US-A-2 848 014  (HYDRAULIC UNIT SPECIALTIES CO.) | | TECHNICAL FIELDS SEARCHED (Int. Cl ⁵) |
| | --- | | |
| A | US-A-3 322 150  (GRESEN MFG. CO.) | | F 16 K  11/00 <br> F 16 K  17/00 <br> F 15 B  11/00 |
| | --- | | |
| A | FR-A-1 149 979  (J. HABERSETZER) | | |
| | ----- | | |

The present search report has been drawn up for all claims

| Place of search | Date of completion of the search | Examiner |
|---|---|---|
| THE HAGUE | 28-09-1984 | DE SMET F.P. |